# EUROPÄISCHE PATENTSCHRIFT

(11) **EP 3 138 752 B1**
(45) Veröffentlichungstag und Bekanntmachung des Hinweises auf die Patenterteilung: **08.07.2020**
(21) Anmeldenummer: 16182405.7
(22) Anmeldetag: 02.08.2016
(51) Int. Cl.: B60W 50/14, B60W 50/00

(54) **VERFAHREN UND SYSTEM ZUR UNTERSTÜTZUNG EINES NUTZERS BEI DER PLANUNG UND DURCHFÜHRUNG EINES BEFAHRENS EINER FAHRSTRECKE MIT EINEM FAHRZEUG**
METHOD AND SYSTEM FOR ASSISTING A USER IN PLANNING AND IMPLEMENTING THE DRIVING OF A ROUTE WITH A VEHICLE
PROCEDE ET SYSTEME DESTINES A ASSISTER UN UTILISATEUR LORS DE LA PLANIFICATION ET L'EXECUTION D'UN PARCOURS ROUTIER AVEC SON VEHICULE

(30) Priorität: 02.09.2015 DE 102015216817
(43) Veröffentlichungstag der Anmeldung: 08.03.2017
(73) Patentinhaber: Volkswagen Aktiengesellschaft, 38440 Wolfsburg (DE)
(72) Erfinder: Kleen, Andro, 38100 Braunschweig (DE); Wyszka, Robert, 30169 Hannover (DE); Schröder, Heiko, 38102 Braunschweig (DE); Proeve, Frauke, 38173 Dettum (DE); Bendewald, Lennart, 38442 Wolfsburg (DE)

(56) Entgegenhaltungen:
- EP-A1- 2 778 007
- EP-A2- 1 790 946
- DE-A1-102013 000 132
- US-A1- 2011 022 267

## Beschreibung

Die vorliegende Erfindung betrifft ein Verfahren und ein System zur Unterstützung eines Nutzers bei der Planung und Durchführung eines Befahrens einer Fahrstrecke, insbesondere einer Rennstrecke, mit einem Fahrzeug.

Zur Unterstützung eines Fahrers bei der Fahrzeugführung ist eine Vielzahl von Fahrerassistenzsystemen bekannt. Unter anderem sind Spurhalteassistenten bekannt, welche den Fahrer beim Halten einer Spur unterstützen. Dabei werden Warnungen ausgegeben, wenn erkannt wird, dass das Fahrzeug die befahrene Fahrspur verlässt. Es sind ferner Navigationsgeräte bekannt, die eine Fahrstrecke von einem Startpunkt zu einem Zielpunkt bestimmen und Hinweise zur Fahrt entlang der Fahrstrecke ausgeben.

Die DE 10 2010 003 985 A1 beschreibt ein Verfahren zum Betrieb eines Fahrerassistenzsystems, bei dem anhand von Daten über die aktuelle Fahrsituation eines Kraftfahrzeugs ein aktueller fahrdynamischer Grenzbereich des Fahrzeugs ermittelt wird. Auf Grundlage des Grenzbereichs werden Fahrempfehlungen erzeugt, wobei der Grenzbereich oder die Fahrempfehlungen angepasst werden, etwa an den Zustand und das Können des Fahrers.

Das in der DE 10 2005 055 744 A1 beschriebene Fahrerassistenzsystem gibt dem Fahrer Hinweise zur Führung des Fahrzeugs aus, die anhand eines berechneten Dynamikverlaufs und einer Ideallinie für das Fahrzeug erzeugt werden. Dabei werden Informationen über den Streckenverlauf berücksichtigt, etwa bevorstehende Kurven. Die Ausgabe der Hinweise erfolgt visuell, akustisch und/oder haptisch wahrnehmbar.

Bei dem Fahrerinformationssystem gemäß der DE 10 2011 106 358 A1 können Daten zu einer Fahrt auf einer Rennstrecke erfasst und gespeichert werden. Beispielsweise können die Parameter der Fahrt aufgezeichnet und anschließend verglichen werden, etwa für verschiedene Runden.

In der EP 1 790 946 A2 wird ein Fahrerassistenzsystem mit einem Informationssystem beschrieben, bei dem Dynamikdaten für das Fahrzeug berechnet werden und anhand des Dynamikverlaufes Hinweise zur Führung des Fahrzeugs ausgegeben werden.

Der vorliegenden Erfindung liegt die Aufgabe zugrunde, ein Verfahren und ein System bereitzustellen, die den Fahrer auf einfache und intuitive Weise dabei unterstützen, eine Fahrstrecke optimal zu befahren.

Diese Aufgabe wird erfindungsgemäß durch ein Verfahren gemäß Anspruch 1 und ein System gemäß Anspruch 12 gelöst. Vorteilhafte Ausgestaltungen und Weiterbildungen ergeben sich aus den abhängigen Ansprüchen.

Bei dem erfindungsgemäßen Verfahren werden Daten über die Fahrstrecke erfasst und es werden theoretische Optimaldaten zumindest eines Parameters zum optimalen Befahren der Fahrstrecke bestimmt. Ferner werden tatsächliche Daten des Parameters während des Befahrens der Fahrstrecke erfasst und es wird eine Abweichung der tatsächlichen Daten von den Optimaldaten ermittelt. In Abhängigkeit von der ermittelten Abweichung wird eine Fahranweisung erzeugt. Anhand der Fahranweisung wird eine graphische Darstellung eines Fahranweisungssymbols erzeugt und auf einer Anzeigefläche eines mobilen Nutzergeräts angezeigt.

Das erfindungsgemäße Verfahren ist dadurch gekennzeichnet, dass bei der Erzeugung des Fahranweisungssymbols in Abhängigkeit von der Fahranweisung ein Rotationswinkel um zumindest eine Achse bestimmt wird.

Voraussetzung für das Durchführen des erfindungsgemäßen Verfahrens ist also, dass die Fahrstrecke vorgegeben ist. Dies kann beispielsweise ein bestimmte Straße sein oder eine Route von einem Start- zu einem Zielpunkt. Insbesondere kann die Fahrstrecke eine Renn- oder Teststrecke sein und beispielsweise einen geschlossenen Streckenverlauf aufweisen. Die Daten über die Fahrstrecke können beispielsweise geographische Daten zum Verlauf der Strecke umfassen, etwa Position und Verlauf von Kurven und Wegkreuzungen, das Höhenprofil und/oder Gefahrenstellen. Die Daten können ferner etwa Eigenschaften umfassen, die für die Dynamik der Fahrt von Bedeutung sind, etwa Art und Zustand des Fahrbahnbelags sowie seine Charakteristik in Abhängigkeit von den klimatischen Bedingungen, vorgegebene Geschwindigkeitsbegrenzungen oder Lichtsignalanlagen.

Anhand der Daten über die Fahrstrecke werden nun theoretische Optimaldaten, d.h. Soll-Werte, zumindest eines Parameters erzeugt. Durch diesen Parameter wird ein optimales Befahren des Fahrstrecke ermöglicht. Der Parameter kann insbesondere die Steuerung des Fahrzeugs betreffen, etwa Zeitpunkt, Stärke und Dauer von Beschleunigung und Verzögerung, den Lenkeinschlag oder die Fahrwerkssteuerung. Es sollen dabei nicht etwa Hinweise zu der richtigen Strecke gegeben werden, z.B. die richtige Abzweigung oder die richtige Straße, sondern Hinweise, die den Fahrer unterstützen, die Fahrstrecke auf optimale Art zu befahren. Die Optimierung kann insbesondere nach dem Aspekt der Geschwindigkeit erfolgen, allerdings können alternativ oder zusätzlich auch andere Aspekte wie Sicherheit, Anforderungen an den Fahrer, Sicherheit und/oder Fahrkomfort berücksichtigt werden.

Die Abweichung ist insbesondere der minimale Abstand des tatsächlichen geometrischen Orts des Fahrzeugs von einer Ideallinie auf der Fahrstrecke oder die Abweichung eines Parameters der tatsächlichen Daten von den Optimaldaten bei jeweils derselben Position in Längsrichtung der Fahrstrecke.

Beim Befahren der Fahrstrecke werden nun die tatsächlichen Daten (Ist-Werte) des Parameters erfasst und mit den Optimaldaten (Soll-Werte) verglichen. Liegt eine Abweichung vor, so wird eine Fahranweisung erzeugt, die es dem Fahrer ermöglichen soll, beim weiteren Befahren der Fahrstrecke wieder die Optimaldaten zu erreichen. Insbesondere kann dies das Befahren einer optimalen Trajektorie innerhalb der Fahrstrecke bedeuten, etwa auf einer bestimmten Fahrspur. Ferner kann die Geschwindigkeit so angepasst werden, dass ein möglichst schnelles Befahren der Fahrstrecke ermöglicht wird. Die Fahranweisung umfasst also insbesondere Informationen zu Maßnahmen, die der Fahrer des Fahrzeugs ergreifen kann, um die tatsächlichen Daten des Parameters während der Fahrt wieder an die Optimaldaten anzunähern. Beispielsweise kann durch die Optimaldaten eine Ideallinie auf der Fahrstrecke definiert sein. Wird anhand der tatsächlichen Daten eine Abweichung von der Ideallinie in eine Richtung festgestellt, so kann der Nutzer durch Eingriff in die Lenkung des Fahrzeugs eine Korrektur der befahrenen Trajektorie bewirken. Hierfür wird dem Fahrer bei dem erfindungsgemäßen Verfahren z.B. die Fahranweisung gegeben.

Schließlich wird zur Unterstützung des Nutzers in Echtzeit anhand der Fahranweisung eine graphische Darstellung eines Fahranweisungssymbols erzeugt, das dem Nutzer die Fahranweisung möglichst schnell und einfach verständlich machen soll. Die Ausgabe erfolgt durch ein mobiles Nutzergerät. Insbesondere geht es hier also um eine optisch wahrnehmbare Ausgabe der Fahranweisung, wahlweise auch unterstützt durch gleichzeitige, anders wahrnehmbare Ausgaben, etwa durch haptisch wahrnehmbare Vibration oder akustische Hinweise. Die Gestaltung des Fahranweisungssymbols kann dabei auf verschiedene Art erfolgen. Insbesondere ist eine reduzierte Gestaltung zu wählen, die der Nutzer auch während des Führens des Fahrzeugs erfassen und verarbeiten kann. Es zeigt sich dabei überraschenderweise, dass die Verwendung solcher optischen Hinweise eine gute Vermittlung der Fahranweisungen ermöglicht, während bei den derzeit verfügbaren Systemen vor allem akustische Ausgabefunktionen genutzt werden.

Die Verwendung eines mobilen Nutzergeräts zur Ausgabe der Fahranweisung ermöglicht vorteilhafterweise eine besonders einfache Anpassung des Systems an verschiedene Fahrzeuge und Fahrzeugtypen. Da das System nicht fest im Fahrzeug verbaut ist, kann das mobile Nutzergerät leicht und kostengünstig ausgetauscht werden, sodass es in verschiedenen Fahrzeugen verwendet werden kann oder durch ein neues Gerät, etwa mit verbesserter Anzeigeleistung, ersetzt werden kann. Der modulare Aufbau ermöglicht ferner einfach Erweiterungen und Aktualisierungen. Zudem kann die Positionierung eines mobilen Geräts innerhalb des Fahrzeugs nach Wunsch gewählt und an die Anforderungen des Einzelfalls angepasst werden, was für fest verbaute Einrichtungen des Fahrzeugs nicht unbedingt der Fall ist.

Es kann ferner eine Speicherung der bei der Ausführung des Verfahrens anfallenden Daten vorgenommen werden. Beispielsweise können Daten durch eine Speichereinheit des mobilen Nutzergeräts gespeichert und später wieder abgerufen werden. Analog dazu kann eine Übertragung an einen externen Speicher, etwa einen Server, erfolgen. Insbesondere ermöglicht dies die Nutzung der Daten für einen größeren Nutzerkreis.

Bei einer Weiterbildung der Erfindung umfasst der zumindest eine Parameter einen Bewegungsparameter und/oder einen Steuerungsparameter des Fahrzeugs, insbesondere die Position, die Geschwindigkeit, die Beschleunigung, die Lenkbetätigung und/oder die Bremsbetätigung.

Dabei beziehen sich die Optimaldaten vorteilhafterweise auf die Ideallinie auf der Fahrstrecke, einen für die Durchfahrt eines Streckenabschnitts optimalen Geschwindigkeitsverlauf, einen optimalen Lenkeinschlag, insbesondere an welcher Position der Ideallinie gelenkt werden soll und wie groß der Lenkeinschlag optimalerweise sein soll, einen optimalen Beschleunigungspunkt, welcher in der Regel im Scheitelpunkt einer Kurve liegt, und einen optimalen Bremspunkt sowie eine optimale Dauer eines Bremsvorgangs. Die tatsächlichen Daten beziehen sich jeweils auf die gleichen Parameter. Dabei wird allerdings vom System gemessen, an welcher Position der Fahrstrecke sich das Fahrzeug zu welcher Zeit befindet, welche Geschwindigkeit das Fahrzeug an welcher Position der Fahrstrecke aufweist, der tatsächliche Lenkeinschlag, der tatsächliche Beschleunigungspunkt und/oder der tatsächliche Bremspunkt auf dem Streckenabschnitt. Betrifft der Parameter Geschwindigkeits- und/oder Verzögerungsdaten, so kann insbesondere der Gaspedalweg bzw. der Bremspedalweg während eines Beschleunigungs- bzw. Bremsvorgangs ermittelt werden. Der Parameter umfasst also vorteilhafterweise Größen, die für eine sichere aber gleichzeitig schnelle, etwa geschwindigkeitsoptimierte Durchfahrt durch die gesamte Fahrstrecke verantwortlich sind.

Bei einer Ausbildung umfasst das Fahranweisungssymbol eine dreidimensionale Darstellung eines geometrischen Objekts, insbesondere einer Pyramide. Dies ermöglicht vorteilhafterweise die Darstellung der Fahranweisung durch ein einfaches, graphisch reduziert darstellbares Symbol. Insbesondere beim Befahren einer Rennstrecke kann ein solches Objekt sehr einfach erfasst und kognitiv verarbeitet werden.

Eine Pyramide weist dreieckige Seitenflächen auf, die dem Nutzer wegen der im Verkehrsalltag weit verbreiteten Pfeilsymbolik schnell anzeigen können, in welche Richtung (rechts, links) Lenkbewegungen durchzuführen sind und ob das Fahrzeug in oder gegen die Fahrtrichtung beschleunigt bzw. verzögert werden soll. Analog dazu können andere geometrische Formen verwendet werden, die ebenfalls eine Richtung auszeichnen können. Hinzu kommt die polygonale Grundfläche, die deutlich von den dreieckigen Seitenflächen unterscheidbar ist.

Bei Darstellungen dreidimensionaler Objekte ist ferner zu beachten, dass durch die Ausrichtung im Raum die dargestellte Form variiert werden kann. Beispielsweise kann bei einer Pyramide durch eine Draufsicht auf eine der dreieckigen Seitenflächen eine Pfeilform erzeugt werden, während bei Draufsicht auf die beispielsweise viereckige Grundfläche keine Richtung ausgezeichnet ist.

Ferner weist bei einer Ausgestaltung der Erfindung das Fahranweisungssymbol eine farbliche Gestaltung auf, die in Abhängigkeit von der Fahranweisung erzeugt wird. Dabei steht insbesondere Rot für eine Verzögerung und Grün für eine Beschleunigung. Der Nutzer ist mit dieser Farbsymbolik vorteilhafterweise bereits aus dem Verkehrsalltag vertraut, beispielsweise sind diese Farben von Lichtsignalanlagen bekannt. Die farbliche Gestaltung kann allerdings vollständig an die Erfordernisse oder Wünsche angepasst werden. Beispielsweise kann ein solches Farbschema verwendet werden, das die Bedürfnisse farbenblinder Nutzer berücksichtigt, die Rot und Grün nicht unterscheiden können. Verschiedene Flächen oder Bereiche des Fahranweisungssymbols können dabei unterschiedliche Farben aufweisen.

Bei einer Weiterbildung weist das Fahranweisungssymbol eine Längsachse auf und die Längsachse wird in Abhängigkeit von einer Richtungskomponente der Fahranweisung angeordnet. Dadurch kann vorteilhafterweise eine Fahranweisung allein anhand der Anordnung der Längsachse erfasst werden. Beispielsweise kann das Fahranweisungssymbol eine Pfeilform sein oder die Darstellung kann an eine Pfeilspitze angelehnt sein. In diesem Fall gibt die Ausrichtung der Längsachse des geometrischen Objekts eine Richtung wieder.

Bei der Erfindung wird bei der Erzeugung des Fahranweisungssymbols in Abhängigkeit von der Fahranweisung ein Rotationswinkel um zumindest eine Achse bestimmt. Dadurch kann vorteilhafterweise das gleiche Fahranweisungssymbol für Fahranweisungen unterschiedlicher Art benutzt werden. Insbesondere kann durch die Rotation eines dreidimensionalen Objekts in der Darstellung auf einer zweidimensionalen Anzeigefläche je nach Rotationswinkel ein sehr verschiedener Eindruck entstehen, wodurch die Nutzung eines einzigen Objekts verschiedene Anweisungen erlaubt.

In einer Ausbildung der Erfindung weist die graphische Darstellung des Fahranweisungssymbols eine zeitlich veränderliche Komponente auf, insbesondere ein Blinken und/oder eine Bewegung des Fahranweisungssymbols. Der Nutzer kann dadurch vorteilhafterweise weitere Informationen neben dem eigentlichen Fahranweisungssymbol erfassen, etwa einen Hinweis auf die Dringlichkeit der Fahranweisung und/oder die Intensität des durchzuführenden Eingriffs.

Eine Bewegung des Fahranweisungssymbols kann durch Verschiebung der Position auf der Anzeigefläche erzeugt werden, aber auch durch Verändern der Parameter der Darstellung, etwa der Helligkeit oder Intensität, Farbe und Struktur. Insbesondere können Richtungen durch eine Bewegung angezeigt werden oder es kann durch die Geschwindigkeit einer Bewegung die Intensität und/oder Dringlichkeit einer Fahranweisung dargestellt werden.

Die Darstellung des Fahranweisungssymbols kann ferner Zahlen, Buchstaben und/oder andere Symbole umfassen. Beispielsweise kann dem Nutzer eine Rundenzeit angezeigt werden oder es kann die Differenz zwischen der tatsächlichen Fahrt und der Ideallinie angezeigt werden. Bei einer Weiterbildung wird in einem Vergleichsmodus in Abhängigkeit von der ermittelten Abweichung eine graphische Vergleichsdarstellung mit einer räumlichen Repräsentation der Fahrstrecke erzeugt und auf der Anzeigefläche des mobilen Nutzergeräts angezeigt. Der Nutzer kann daraus vorteilhafterweise erfassen, wie genau die tatsächlichen Daten des Parameters während der Fahrt mit den Optimaldaten übereinstimmen, und gegebenenfalls Abweichungen einer bestimmten Position auf der Fahrstrecke zuordnen.

Der "Vergleichsmodus" steht dabei im Kontrast zu der oben beschriebenen Funktion des Systems während des Befahrens der Fahrstrecke. Im Anschluss an das Befahren oder vor Fahrtantritt kann im Vergleichsmodus anhand von gespeicherten Daten früherer Fahrten bestimmt werden, in welchen Bereichen des Fahrstrecke das Fahrverhalten angepasst werden muss, um die tatsächlichen Daten des Parameters an die Optimaldaten anzugleichen.

Dazu kann etwa die räumliche Repräsentation der Fahrstrecke ein Anzeigeelement sein, welches den geographischen Streckenverlauf der Fahrstrecke wiedergibt. Der Vergleich kann dadurch angezeigt werden, dass zumindest ein graphisches Element für die Optimaldaten des Parameters und ein graphisches Element für die tatsächlichen Daten des Parameters auf der Anzeigefläche erzeugt werden. Dadurch, dass für denselben Parameter beispielweise ein Optimalwert und ein tatsächlich gemessener Wert oder eine Optimalposition und eine tatsächliche Position auf der Fahrstrecke für ein bestimmtes Fahrmanöver über graphische Elemente gleichzeitig in einer graphischen Darstellung angezeigt werden, wird auf einfach erfassbare Weise angezeigt, an welcher Stelle der Fahrstrecke die tatsächlichen Daten von den Optimaldaten abweichen.

Es wird deutlich, wann und/oder wo beim Befahren der Fahrstrecke Verbesserungen möglich sind. Der Vergleich zu den Optimaldaten kann dadurch angezeigt werden, dass zumindest ein graphisches Element für die Optimaldaten des Parameters und ein graphisches Element für die tatsächlichen Daten des Parameters auf der Anzeigefläche erzeugt werden. Dadurch, dass für denselben Parameter beispielweise ein Optimalwert und ein tatsächlich gemessener Wert oder eine Optimalposition oder eine tatsächliche Position auf der Fahrstrecke für ein bestimmtes Fahrmanöver über graphische Elemente gleichzeitig in einer graphischen Darstellung angezeigt werden, wird auf einfach erfassbare Weise angezeigt, an welcher Stelle der Fahrstrecke die Optimaldaten von den tatsächlichen Daten abweichen.

Bei einer weiteren Ausgestaltung umfasst die graphische Vergleichsdarstellung ferner eine Überlagerung eines optimalen Verlaufs des Parameters und einen tatsächlich erfassten Verlauf des Parameters entlang der Fahrstrecke. Der Nutzer kann dadurch vorteilhafterweise erfassen, wie die Abweichungen von den Optimaldaten entlang der Strecke verteilt ist.

Dabei wird insbesondere der Parameter auf einer y-Achse gegen die Fahrstrecke in Metern oder Kilometern auf einer x-Achse gegeneinander aufgetragen. In einer solchen Darstellung werden dann der optimale Verlauf und der tatsächliche Verlauf des Parameters entlang der Fahrstrecke in dem gleichen x-y-Koordinatensystem angezeigt. Durch diese Darstellung des Vergleichs wird vorteilhafterweise sofort klar, an welchem Punkt der Fahrstrecke die tatsächlichen Daten von den Optimaldaten abweichen.

Ferner kann der Streckenverlauf durch eine geographische Darstellung in Form einer Karte repräsentiert sein und der Parameter, etwa die Trajektorie, entlang derer das Fahrzeug die Fahrstrecke befahren hat, kann gleichzeitig mit der Ideallinie angezeigt werden.

In einer Weiterbildung der Erfindung umfasst die räumliche Repräsentation der Fahrstrecke zumindest zwei Streckenabschnitte. Die Streckenabschnitte werden als auswählbare Segmente des Anzeigeelements erzeugt und, wenn ein Segment ausgewählt wird, werden die dem ausgewählten Segment zugeordneten Optimaldaten und die tatsächlichen Daten zu dem Streckenabschnitt angezeigt. So kann der Nutzer vorteilhafterweise verschiedene Bereiche des Fahrstrecke unterscheiden und analysieren, es kann also ein Training erfolgen.

Dabei kann der Vergleich auf einen Streckenabschnitt der Fahrstrecke begrenzt werden. Dies erlaubt vorteilhafterweise eine detailliertere Darstellung des Vergleichs. Zudem können Streckenabschnitte, welche nicht mehr optimiert werden müssen, aus der Betrachtung herausgenommen werden. Der Fahrer kann sich dann auf einen Streckenabschnitt konzentrieren, welcher ihm noch Probleme bereitet.

Weiterhin kann, wenn ein Segment ausgewählt wird, eine Detaildarstellung des dem Segment zugeordneten Streckenabschnitts auf der Anzeigefläche erzeugt werden, wobei die Optimaldaten, die tatsächlichen Daten und/oder der Vergleich der Optimaldaten mit den tatsächlichen Daten in der Detaildarstellung dargestellt werden. Dadurch wird es vorteilhafterweise ermöglicht, eine genaue Analyse jedes Streckenabschnitts durchzuführen. Zudem können Streckenabschnitte, auf welchen lediglich geringe oder keine Abweichungen der tatsächlichen Daten zu den Optimaldaten gemessen wurden, übergangen werden, während besonderes Augenmerk auf die Streckenabschnitte gelegt werden kann, auf welchen große Abweichungen der tatsächlichen Daten zu den Optimaldaten gemessen wurden.

Insbesondere kann jeder Streckenabschnitt einer Kategorie zugeordnet werden. Dabei ist die Kategorie, welcher ein Streckenabschnitt zugeordnet wird, abhängig von einer Größe einer Abweichung der tatsächlichen Daten von den Optimaldaten für den Streckenabschnitt. Die Kategorie, welcher der Streckenabschnitt zugeordnet ist, wird über einen Anzeigeparameter in dem Anzeigeelement angezeigt. Das Anzeigeelement stellt dann eine Übersichtsdarstellung des Vergleichs der Optimaldaten mit den tatsächlichen Daten dar. Dadurch kann vorteilhafterweise auf einen Blick erfasst werden, an welchen Stellen der Fahrstrecke die tatsächlichen Daten von den Optimaldaten abweichen und wie stark die Abweichung ist. Der Anzeigeparameter für die Streckenabschnitte kann dabei insbesondere eine Hervorhebungsart, eine Farbe und/oder ein Muster umfassen. Über eine solche Darstellung der Streckenabschnitte in dem Anzeigeelement kann der Fahrer vorteilhafterweise sehr einfach verbesserungswürdige Streckenabschnitte auf der Fahrstrecke identifizieren.

Die Kategorisierung kann dabei insbesondere anhand verschiedener Kriterien vorgenommen werden. Ausgangspunkt kann dabei entweder eine durch das System vorgegebene Ideallinie der Fahrstrecke oder eine vom System vorgegebene ideale Fahrweise sein. Der Fahrer kann sich jedoch auch ideale Durchfahrten eines Streckenabschnitts selbst definieren. Bewertungskriterien für die Kategorisierung können etwa sein: Grad der Übereinstimmung der Querführung (Position des Fahrzeugs auf der Fahrbahn), Grad der Übereinstimmung der Längsführung (Geschwindigkeit, Beschleunigung, Verzögerung), Zeit für eine Durchfahrt durch den Streckenabschnitt, Treibstoffverbrauch, Grad der Übereinstimmung von Quer- und Längsbeschleunigung. Die Übereinstimmung kann dann mit den vom System vorgegebenen idealen Daten oder mit den vom Fahrer selbst als ideal definierten Daten gemessen werden. Eine Farbcodierung einzelner Segmente kann dabei insbesondere wie folgt die Übereinstimmung der idealen Daten mit den tatsächlichen Daten anzeigen: grün = weitgehende Übereinstimmung, gelb = leichte Abweichungen, rot = starke Abweichungen.

Weiterhin kann ein das Fahrzeug repräsentierendes graphisches Objekt in der Detaildarstellung des Streckenabschnitts erzeugt werden, wobei anhand der tatsächlichen Daten eine Animation der Durchfahrt durch den Streckenabschnitt erzeugt wird, wobei ein tatsächlicher Bewegungsverlauf des Fahrzeugs auf der Fahrstrecke über das graphische Objekt dargestellt wird. Das graphische Objekt kann dabei insbesondere als Ego-Fahrzeug ausgestaltet sein. Durch die Animation wird dem Fahrer insbesondere der tatsächliche Verlauf seiner Fahrt mit Bezug zu einem optimalen Verlauf der Fahrt angezeigt. Wird beispielsweise die Ideallinie in der detaillierten Darstellung des Streckenabschnitts dargestellt, kann der Fahrer vorteilhafterweise sofort erfassen, an welchen Stellen der Fahrstrecke die tatsächlich gefahrene Linie von der Ideallinie abweicht. Zudem kann er über animierte Beschleunigungen und Verzögerungen sofort erfassen, ob er zu früh oder zu spät beschleunigt oder gebremst hat. Zusätzlich kann der sogenannte "Kamm'sche Kreis", über welchen während der Fahrt aufgetretene Quer- und Längsbeschleunigungen dargestellt werden können, um das graphische Objekt herum angezeigt werden. Weiterhin können in separaten Anzeigesymbolen die Optimaldaten und die tatsächlichen Daten positionsbezogen angezeigt werden.

In einer anderen Ausgestaltung können tatsächliche Daten zu zumindest zwei aufeinanderfolgenden Durchfahrten durch die Fahrstrecke erfasst werden. Die tatsächlichen Daten der zwei Durchfahrten oder die tatsächlichen Daten der Durchfahrten und die Optimaldaten werden miteinander verglichen und der Vergleich wird auf der Anzeigefläche angezeigt. Dadurch kann vorteilhafterweise angezeigt werden, ob und an welchen Stellen der Fahrstrecke sich der Fahrer tatsächlich verbessert oder verschlechtert hat. Insbesondere können dadurch vorteilhafterweise Streckenabschnitte identifiziert werden, welche dem Fahrer besonders große Probleme bereiten. Dadurch kann der Fahrer die Durchfahrt durch die Fahrstrecke besonders effizient optimieren.

Die Optimaldaten können insbesondere aus den tatsächlichen Daten einer oder mehrerer Durchfahrten der Fahrstrecke ermittelt werden. Die Optimaldaten müssen also keine rein aus den Besonderheiten der Fahrstrecke ermittelten Daten sein. Die Optimaldaten können auf diese Weise an die Fahrweise des Fahrers angepasst werden. Insbesondere können die tatsächlichen Daten einer vorgegebenen Durchfahrt durch die Fahrstrecke, etwa durch einen Trainer, als Optimaldaten bestimmt werden.

Bei einer Ausgestaltung werden in einem Konfigurationsmodus Konfigurationseingaben von dem Nutzer erfasst. Dies erlaubt vorteilhafterweise die Bedienung des Systems, beispielsweise anhand von Menüs, wobei der Nutzer eigene Einstellungen vornehmen kann, die das System an seine Bedürfnisse und Gewohnheiten anpassen. In dem Konfigurationsmodus können beispielsweise Menüs angezeigt werden, die dem Nutzer die Eingabe oder Auswahl von Optionen zur Konfiguration ermöglichen.

In einer Weiterbildung weist das Fahranweisungssymbol eine farbliche Gestaltung auf, die in Abhängigkeit von den Konfigurationseingaben erzeugt wird. Der Nutzer kann so vorteilhafterweise bestimmen, wie die Darstellung erfolgt. Dies kann beispielsweise mit Rücksicht auf Sehschwächen des Nutzers angepasst werden oder es können verschiedene Kontraste verwendet werden, um die Darstellung schnell erfassbar zu gestalten.

Das erfindungsgemäße System der oben genannten Art umfasst eine Erfassungseinheit, mittels welcher Daten über die Fahrstrecke erfassbar sind und tatsächliche Daten eines Parameters während des Befahrens der Fahrstrecke erfassbar sind. Es umfasst ferner eine Ermittlungseinheit, mittels welcher theoretische Optimaldaten zumindest eines Parameters zum optimalen Befahren der Fahrstrecke bestimmbar sind, und eine Steuereinheit, mittels welcher eine Abweichung der tatsächlichen Daten von den Optimaldaten ermittelbar ist, in Abhängigkeit von der ermittelten Abweichung eine Fahranweisung erzeugbar ist und anhand der Fahranweisung eine graphische Darstellung eines Fahranweisungssymbols erzeugbar ist. Es umfasst zudem ein mobiles Nutzergerät mit einer Anzeigefläche, auf der die graphische Darstellung anzeigbar ist.

Das erfindungsgemäße System ist dadurch gekennzeichnet, dass bei der Erzeugung des Fahranweisungssymbols in Abhängigkeit von der Fahranweisung ein Rotationswinkel um zumindest eine Achse bestimmbar ist.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems umfasst der zumindest eine Parameter einen Bewegungsparameter und/oder einen Steuerungsparameter des Fahrzeugs, insbesondere die Position, die Geschwindigkeit, die Beschleunigung, die Lenkbetätigung und/oder die Bremsbetätigung.

Bei einer weiteren Ausgestaltung des erfindungsgemäßen Systems ist die Anzeigefläche im Fahrzeug am unteren Rand des Blickfeldes des Fahrers, insbesondere auf dem Armaturenbrett hinter dem Lenkrad, angeordnet. Dadurch kann der Fahrer des Fahrzeugs vorteilhafterweise das auf der Anzeigefläche angezeigte Fahrhinweissymbol leicht erfassen, ohne den Blick von der vor ihm liegenden Fahrstrecke abwenden zu müssen.

Die Anzeigefläche kann insbesondere als Sichtfeldanzeige ausgestaltet sein, etwa durch Einspiegelung in einem Helmvisier oder in einem Head-up-Display. Die Anzeige kann dabei dennoch über das mobile Nutzergerät erfolgen, das beispielsweise die Sichtfeldanzeige steuert.

Die Erfindung wird nun anhand eines Ausführungsbeispiels mit Bezug zu den Zeichnungen erläutert.
- Figuren 1A und 1B: zeigen Ausführungsbeispiele des erfindungsgemäßen Systems,
- Figur 1C: zeigt ein Beispiel für die Anordnung des erfindungsgemäßen Systems im Inneren eines Fahrzeugs,
- Figur 2: zeigt ein Ausführungsbeispiel des erfindungsgemäßen Verfahrens,
- Figuren 3A bis 3D: zeigen Ausführungsbeispiele von erfindungsgemäßen Fahranweisungssymbolen zur Änderung der Geschwindigkeit und der Richtung,
- Figuren 4A und 4B: zeigen weitere Ausführungsbeispiele von erfindungsgemäßen Fahranweisungssymbolen,
- Figur 5: zeigt ein Ausführungsbeispiel eines erfindungsgemäßen Fahranweisungssymbol mit einer Zahlenangabe,
- Figuren 6A und 6B: zeigen weitere Ausführungsbeispiele von erfindungsgemäßen Fahranweisungssymbolen zur Leistungsüberprüfung,
- Figuren 7A bis 7E: zeigen Ausführungsbeispiele von erfindungsgemäßen Fahranweisungssymbolen unter Berücksichtigung der richtungsbezogenen Anordnung auf der Anzeigefläche und
- Figuren 8A und 8B: zeigen Ausführungsbeispiele erfindungsgemäß erzeugter Anzeigen.

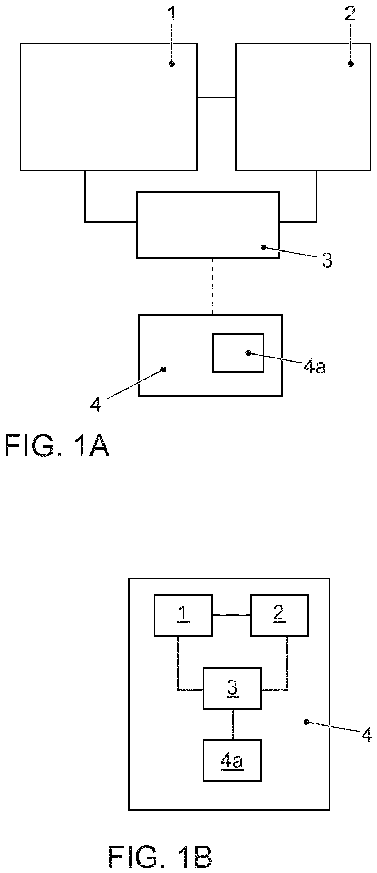

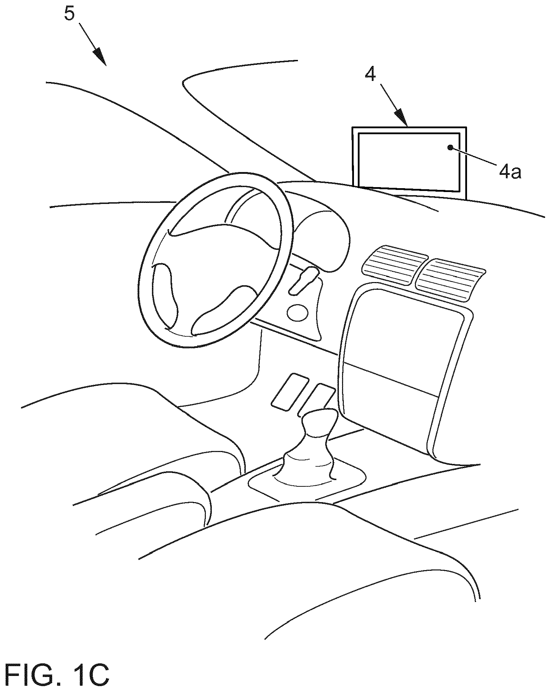

Mit Bezug zu den Figuren 1A und 1C werden Ausführungsbeispiele des erfindungsgemäßen Systems und ein Beispiel für die Anordnung des erfindungsgemäßen Systems im Inneren eines Fahrzeugs erläutert.

Das erfindungsgemäße System umfasst eine Erfassungseinheit 1 und eine Ermittlungseinheit 2. Beide sind sowohl miteinander, als auch mit einer Steuereinheit 3 gekoppelt. Die Steuereinheit 3 wiederum ist datentechnisch gekoppelt mit einer Anzeigefläche 4a eines mobilen Nutzergeräts 4.

Im Fall der Figur 1A umfasst das mobile Nutzergerät 4 die Anzeigefläche 4a und ist datentechnisch mit der Steuereinheit 3 verbunden. Die Erfassungseinheit 1, die Ermittlungseinheit 2 und die Steuereinheit 3 können in diesem Fall etwa von dem Fahrzeug umfasst oder in weitere Geräte integriert sein. Dagegen zeigt Figur 1B einen Fall, bei dem das mobile Nutzergerät 4 sämtliche der genannten Einheiten umfasst. Beispielsweise kann ein Mobiltelefon durch eine integrierte GPS-Einheit die Position und Bewegung des Fahrzeugs erfassen, die erfindungsgemäßen Berechnungen mittels eines Prozessors durchführen und die Darstellung auf einem Display ausgeben. Ferner sind in weiteren Ausführungsbeispielen Mischformen möglich, bei denen beispielsweise Einrichtungen des Fahrzeugs Daten über die Geschwindigkeit, Lenkeinschläge, Bremsen und Beschleunigen erfassen und etwa an das mobile Nutzergerät 4 übertragen.

Das erfindungsgemäße System ist im in Figur 1C dargestellten Beispiel in einem Fahrzeug 5 angeordnet, wobei insbesondere das mobile Nutzergerät 4 lösbar oder per Funkverbindung mit dem Fahrzeug 5 verbunden ist. Das mobile Nutzergerät 4 kann beispielsweise ein Mobiltelefon oder ein Tablet-Computer sein.

Das mobile Nutzergerät 5 ist, wie in Figur 1C angedeutet, mittels einer Haltevorrichtung so im Fahrzeug 5 angebracht, dass es sich bei den während der Fahrt auftretenden Beschleunigungen und Verzögerungen nicht von selbst löst. Die Anzeigefläche 4a befindet sich im Gesichtsfeld des Fahrers des Fahrzeugs 5, etwa hinter dem Lenkrad direkt oberhalb des Armaturenbretts. Die Anordnung der Anzeigefläche 4a kann jedoch auf verschiedene Weise erfolgen, etwa seitlich, oben oder in anderen geeigneten Bereichen.

Die Anzeigefläche 4a kann in das mobile Nutzergerät 4 integriert oder mit ihm verbunden sein. Bei einer weiteren Ausführung der Erfindung ist die Anzeigefläche 4a des mobilen Nutzergeräts 4 eine Sichtfeldanzeige, insbesondere in einem Helmvisier. Ferner kann eine Datenbrille genutzt werden. In beiden Fällen erfolgt die Darstellung mittels einer transparenten Fläche, etwa durch Einspiegeln, so dass der Fahrer des Fahrzeugs 5 den Blick nicht vom Verkehrsgeschehen abwenden muss.

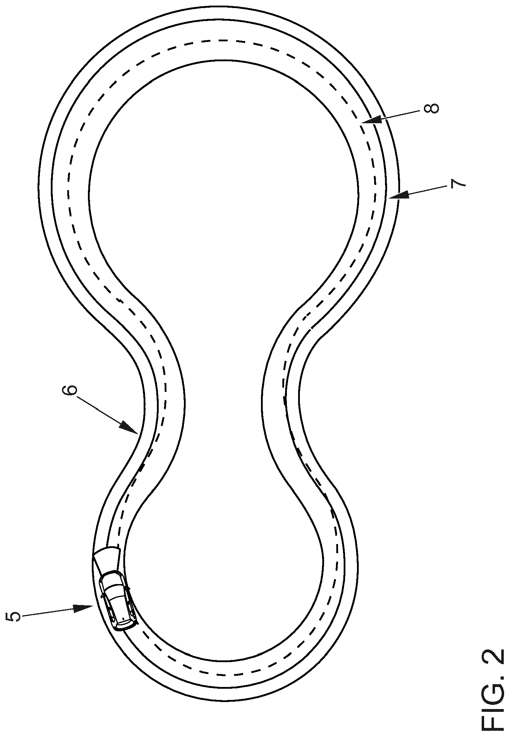

Mit Bezug zu Figur 2 wird ein Ausführungsbeispiel des erfindungsgemäßen Verfahrens erläutert. Das in Figur 1A gezeigte erfindungsgemäße System wird dabei zur Ausführung des Verfahrens verwendet.

Das Fahrzeug 5 befährt eine Fahrstrecke 6, im dargestellten Fall eine geschlossene Rennstrecke. Die Erfassungseinheit 1 erfasst Daten über die Fahrstrecke 6 und über die tatsächlich durch das Fahrzeug 5 befahrene Trajektorie 7. Die befahrene Fahrstrecke 6 wird dabei erkannt, indem durch ein System zur geographischen Positionsbestimmung die nächstliegende Rennstrecke bestimmt wird. Ferner kann die zuletzt befahrene Fahrstrecke voreingestellt sein oder der Nutzer kann manuell die Fahrstrecke 5 auswählen. Beispielsweise kann es sich um eine geschlossene Renn- oder Teststrecke handeln.

Die Daten über die Fahrstrecke 6 werden im dargestellten Beispiel auf verschiedene Weisen erfasst. Es werden geographische Informationen über den Streckenverlauf über ein Navigationssystem abgerufen und zusätzliche Daten werden von einem externen Server abgerufen. Ferner kann der Nutzer manuelle Eingaben vornehmen. Die Daten über die Fahrstrecke 5 umfassen den geographischen Streckenverlauf, Informationen über den Belag der Fahrbahn, bekannte Gefahrenstellen, frühere Ergebnisse von anderen Fahrern, die diese Fahrstrecke 5 befahren haben. Ferner werden durch die Erfassungseinheit 6 Daten über die klimatischen Bedingungen auf der Fahrstrecke 6 erfasst, etwa Nebel, Regen, Schnee, hohe oder niedrige Temperaturen sowie die Windstärke.

Die Erfassungseinheit 1 überträgt relevante Daten an die Ermittlungseinheit 2, durch die Optimaldaten für Parameter zum Befahren der Fahrstrecke 6 bestimmt werden. Insbesondere beschreiben diese Parameter im vorliegenden Fall die Führung des Fahrzeugs 5 in Längs- und Querrichtung, das heißt mit Bezug auf die Geschwindigkeit und die seitliche Steuerung. Es wird eine Ideallinie 8 bestimmt, entlang derer das Fahrzeug 5 die Fahrstrecke 6 möglichst schnell befahren kann. Die Ideallinie 8 hängt insbesondere von der jeweiligen Fahrstrecke 6 ab und kann entweder direkt von der Ermittlungseinheit 2 erzeugt werden oder es kann eine bereits vorgegebene Ideallinie 8 abgerufen werden. In die Bestimmung der Ideallinie 8 fließen Informationen über den Zustand der Fahrstrecke 6 ein, etwa Regennässe, sowie Informationen über das Fahrzeug 5 und den Nutzer, der beispielsweise über höhere oder geringere Fähigkeiten verfügen kann. Der Nutzer kann insbesondere den Fahrzeugtyp und die Bereifung manuell einstellen. Je nach den Fähigkeiten des Nutzers können unterschiedliche Sicherheitsmaßnahmen berücksichtigt werden, beispielsweise kann dem Nutzer eine geringere Geschwindigkeit vorgegeben werden, wenn auf diese Weise Gefahren verringert werden.

Beim Befahren der Fahrstrecke 6 erfasst die Erfassungseinheit 1 die tatsächlich gefahrene Strecke 7, entlang derer sich das Fahrzeug 5 bewegt. Diese stimmt in dem gezeigten Beispiel nicht vollständig mit der Ideallinie 8 überein. Die Abweichung wird von der Ermittlungseinheit bestimmt und es wird eine Fahranweisung erzeugt, die Maßnahmen zur Annäherung an die Ideallinie 8 umfasst. Beispielsweise soll, wenn sich das Fahrzeug 5 links neben der Ideallinie 8 befindet, durch einen Lenkeinschlag nach rechts gegengesteuert werden. Wird ein Streckenabschnitt mit einer höheren als der optimalen Geschwindigkeit befahren, so ist ein Abbremsen nötig.

Um dem Nutzer diese Fahranweisungen zu signalisieren, wird erfindungsgemäß ein visuell wahrnehmbares Signal ausgegeben. In weiteren Ausführungsbeispielen werden zusätzlich dazu akustisch und/oder haptisch wahrnehmbare Signale ausgegeben. Es wird eine graphische Darstellung eines Fahranweisungssymbols erzeugt und auf der Anzeigefläche 4a angezeigt. Der Nutzer kann so das Fahrzeug 5 auf die Ideallinie 8 bringen.

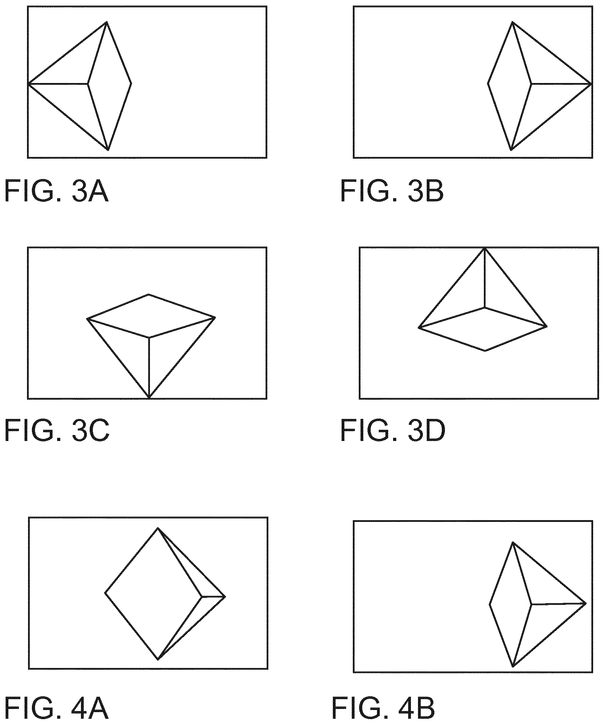

Mit Bezug zu den Figuren 3A bis 3D werden Ausführungsbeispiele von erfindungsgemäßen Fahranweisungssymbolen zur Änderung der Geschwindigkeit und der Richtung erläutert. Zur Ausführung des erfindungsgemäßen Verfahrens wird das anhand der Figuren 1A und 1C beschriebene System verwendet.

Ist die Anzeigefläche, wie in Figur 1C dargestellt, am unteren Rand des Blickfelds des Fahrers des Fahrzeugs 5 angeordnet, so muss die Darstellung so beschaffen sein, dass das jeweilige Fahranweisungssymbol auch aus dem Augenwinkel wahrgenommen wird. Grundlegend ist hier ein Rauten- bzw. dreidimensionales Pyramidenkonzept mit der Verwendung schnell erfassbarer Darstellungen. Durch Kippen der Pyramide in die Richtung, in die ein Eingriff des Fahrers erfolgen soll, wird eine klar und schnell verständliche Fahranweisung ausgegeben. In weiteren Ausführungsbeispielen werden andere zwei- oder dreidimensionale Objekte analog zu einer Pyramide verwendet. Beispielsweise kann ein Kegel verwendet werden. Die Verwendung dreidimensionaler Objekte, insbesondere einer Pyramide führt zur Wahrnehmung einer höheren Wertigkeit des Systems durch den Nutzer.

Figur 3A zeigt eine seitliche Ansicht einer Pyramide, deren Spitze nach links gekippt ist, sodass sich eine Pfeilform ergibt, die für den Nutzer bekannt ist und schnell erfasst werden kann. Die Fahranweisung bedeutet in diesem Fall, dass ein Lenkeinschlag nach links durchgeführt werden soll. Umgekehrt bedeutet ein Kippen nach rechts, wie in Figur 3B dargestellt, dass der Kurs nach rechts korrigiert werden soll.

Neben der Quer- ist auch die Längsregelung der Fahrzeugbewegung darstellbar: Figur 3C zeigt eine mit der Spitze nach unten gekippte Darstellung der gleichen Pyramide wie zuvor und symbolisiert damit eine Verzögerung. Der Fahrer des Fahrzeugs 5 wird also zum Bremsen aufgefordert. Umgekehrt symbolisiert eine mit der Spitze nach oben gekippte Pyramide, dargestellt etwa in Figur 3D, dass der Fahrer eine Beschleunigung ausführen soll.

Zusätzlich zu dem Raumwinkel, entlang dem die Pyramide ausgerichtet ist, verstärkt die farbliche Gestaltung die Wirkung des Fahranweisungssymbols für die Anzeige der Fahranweisung. Im gezeigten Fall sei die Grundfläche der Pyramide rot gefärbt, wenn eine Verzögerung vorgenommen werden soll, und grün, wenn der Fahrer beschleunigen soll. Zusätzlich ist vorgesehen, dass Seitenflächen und/oder die Grundfläche der Pyramide blinken, wenn ein besonders kurzfristiger Steuerungseingriff erfolgen soll.

Dies ermöglicht auch, mehrere Typen von Fahranweisungen in einem Fahranweisungssymbol zu kombinieren, etwa durch die Färbung einer zur Seite gekippten Pyramide. Wird beispielsweise eine nach linkes weisende Spitze durch gleichzeitige Rotfärbung der Grundfläche ergänzt, so kann vermittelt werden, dass gleichzeitig ein Lenkeinschlag nach links und eine Bremsung vorgenommen werden sollen.

In einem weiteren Ausführungsbeispiel erfolgt die Darstellung des Fahranweisungssymbols auf dynamische Art, etwa indem die Pyramide eine Bewegung nach der Richtung aufweist, in die eine wünschenswerte Maßnahme des Fahrers gerichtet ist.

Mit Bezug zu den Figuren 4A und 4B werden weitere Ausführungsbeispiele von erfindungsgemäßen Fahranweisungssymbolen erläutert. Die Erzeugung der Fahranweisungssymbole erfolgt analog zu den in den Figuren 3A bis 3D dargestellten Fällen.

Dabei ist zu beachten, dass die Neigung der Pyramide stufenlos wählbar ist. Durch eine mehr oder weniger stark ausgeprägte Rotation lässt sich also die Intensität des durch die Fahranweisung geforderten Eingriffs in die Steuerung darstellen.

Im dargestellten Fall soll der Fahrer einen Lenkeinschlag nach rechts vornehmen. Die Pfeilform der gekippten Pyramide in Figur 4A ist dabei weniger stark ausgeprägt als in Figur 4B. Dies hängt davon ab, wie stark die Pyramide geneigt ist. Im Folgenden wird davon ausgegangen, dass im Ausgangszustand die Höhe der Pyramide in Blickrichtung des Nutzers weist und der Nutzer daher in dieser Situation die Spitze der Pyramide nicht sieht. Erfolgt nun ein Kippen nach rechts, wie in den Figuren 4A und 4B dargestellt, so wird zunächst bei wachsendem Kippwinkel die Spitze der Pyramide immer deutlicher für den Nutzer sichtbar, bis bei einem Kippwinkel von 90° der Nutzer genau von der Seite auf die Pyramide blickt und die zugewandte, dreieckige Seitenfläche direkt sichtbar ist.

Figur 4A zeigt einen Fall, bei dem die Pyramide weniger stark nach rechts gekippt ist als in Figur 4B. Dem Nutzer wird damit signalisiert, dass er die Lenkung weniger (Figur 4A) oder stärker (Figur 4B) einschlagen soll.

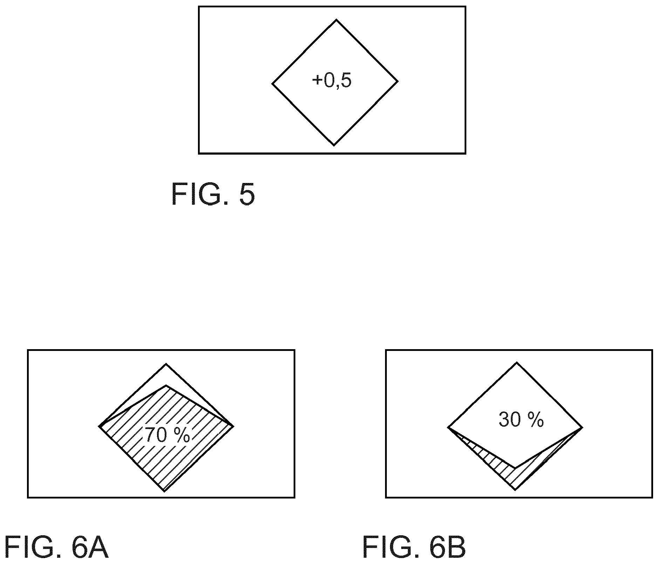

Mit Bezug zu Figur 5 wird ein Ausführungsbeispiel eines erfindungsgemäßen Fahranweisungssymbol mit einer Zahlenangabe erläutert. Die Erzeugung des Fahranweisungssymbols erfolgt analog zu den oben dargestellten Fällen.

Die hier gezeigte Darstellung ist im vorliegenden Beispiel für die Fälle vorgesehen, in denen sich das Fahrzeug 5 auf der Ideallinie 8 befindet oder dass gerade keine Fahrt durchgeführt wird. Im letzteren Fall kann dabei beispielsweise eine Zusammenfassung der letzten durchgeführten Fahrt auf der Fahrstrecke 6 ausgegeben werden.

Wie oben beschrieben, wird davon ausgegangen, dass die Pyramide im Ausgangszustand mit der Spitze vom Nutzer weg weist. Der Nutzer blickt in diesem Fall auf die Grundfläche der Pyramide. Dies symbolisiert entweder, dass das System im Grundzustand keine Fahranweisung ausgibt, etwa weil das Fahrzeug 5 gerade steht, oder dass sich das Fahrzeug auf der Ideallinie 8 befindet und daher ohne Änderungen auf dem gegenwärtigen Kurs bleiben soll.

In Figur 5 ist ein Beispiel dargestellt, wie Zahlenwerte in die Darstellung integriert werden können. Im gezeigten Fall wird zentral auf der polygonalen Grundfläche der (von unten betrachteten) Pyramide der Wert "+0,5" angezeigt, der sich hier auf die Zeitdifferenz bezieht, die in der letzten gefahrenen Runde gegenüber einem vorgegebenen Bestwert auf der Fahrstrecke 6 erreicht wurde. Auf diese Weise können verschiedenste Zahlenwerte, Symbole oder Texte ausgegeben werden.

Mit Bezug zu den Figuren 6A und 6B werden weitere Ausführungsbeispiele von erfindungsgemäßen Fahranweisungssymbolen zur Leistungsüberprüfung dargestellt. Die Erzeugung der Fahranweisungssymbole erfolgt analog zu den oben dargestellten Fällen, insbesondere Figur 5.

Hierbei wird gegenüber dem in der Figur 5 dargestellten Fall ein Prozentwert angegeben, etwa zu wieviel Prozent die tatsächlich gefahrene Strecke 7 mit der Ideallinie 8 übereinstimmt. Dieser Prozentwert wird zusätzlich verdeutlicht durch die Füllung der dargestellten Grundfläche des Pyramidensymbols. Dabei sind die Farben so gewählt, dass ein deutlich erkennbarer Kontrast zwischen einem ausgefüllten und einem leeren Bereich entsteht.

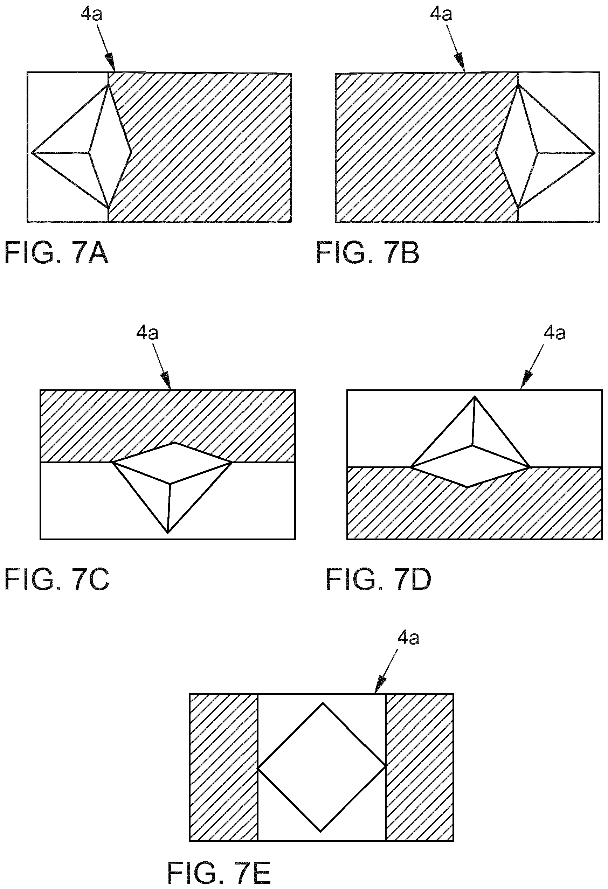

Mit Bezug zu den Figuren 7A bis 7E werden Ausführungsbeispiele von erfindungsgemäßen Fahranweisungssymbolen unter Berücksichtigung der richtungsbezogenen Anordnung auf der Anzeigefläche erläutert. Die Erzeugung der Fahranweisungssymbole erfolgt analog zu den oben dargestellten Fällen.

Wieder wird das allgemeine Pyramidensymbol in Abhängigkeit von der vorzunehmenden Richtungs- oder Geschwindigkeitsänderung gekippt dargestellt. Da jedoch die Anzeigefläche 4a gemäß der in Figur 1C dargestellten Anordnung am Rand des Gesichtsfeldes des Fahrers positioniert ist, muss die Darstellung möglichst leicht und aus dem Augenwinkel erfassbar sein. Daher wird für die Darstellung eine Richtungskongruenz genutzt, das heißt, die Position des Fahranweisungssymbols innerhalb der Anzeigefläche 4a zeigt bereits - wenigstens in groben Zügen - den Inhalt der jeweiligen Fahranweisung an.

In den in den Figuren 7A und 7B dargestellten Fällen soll der Fahrer eine Richtungsanpassung nach links (Figur 7A) bzw. nach rechts (Figur 7B) vornehmen. Die dargestellte Pyramide ist entsprechend nach links oder rechts gekippt. Dabei verläuft die Achse der Kippung aber nicht in der Mitte der Anzeigefläche 4a, sondern so, dass die resultierende Darstellung der gekippten Pyramide sich im linken bzw. rechten Teil der Anzeigefläche 4a befindet. Zusätzlich dazu ist im dargestellten Fall der jeweils andere Bereich der Anzeigefläche 4a abgedunkelt dargestellt, sodass der Nutzer auch bei einem flüchtigen Blick erkennen kann, dass die Information "links" bzw. "rechts" dargestellt ist. Diese zusätzliche Abdunkelung ist nicht notwendig für die Erfindung, erlaubt aber eine zusätzliche Verstärkung des Effekts.

Analog zu den in den Figuren 7A und 7B dargestellten Fällen kann auch eine gewünschte Verzögerung und Beschleunigung angezeigt werden, wie in den Figuren 7C und 7D dargestellt. Hier wird die Pyramide nach unten (Verzögerung) bzw. nach oben (Beschleunigung) gekippt dargestellt und der jeweils andere Bereich der Anzeigefläche 4a wird abgedunkelt dargestellt.

Figur 7E schließlich zeigt die Draufsicht auf die Grundfläche der Pyramide, wie vorstehend bereits für die Grundposition der Pyramide beschrieben. Dabei ist die Darstellung auf der Anzeigefläche 4a zentriert, da keine Richtungsinformation transportiert werden soll und die Randbereiche rechts und links sind abgedunkelt.

In einem weiteren Ausführungsbeispiel kann ein Farb- und Intensitätsverlauf über die Breite der Anzeigefläche 4a dargestellt werden und eine Fahranweisung verdeutlichen. Beispielsweise kann eine "Welle" höherer Helligkeit in grüner Farbe von links nach rechts laufen und damit eine Beschleunigung nach rechts hin darstellen. Umgekehrt kann eine rote Färbung verbunden mit einer Bewegung nach links eine Bremsung bei gleichzeitigem Lenkeinschlag nach links darstellen. Ferner können "Wellen" höherer Helligkeit von außen nach innen laufen, womit etwa eine Aufforderung zu einer Bremsung dargestellt werden kann.

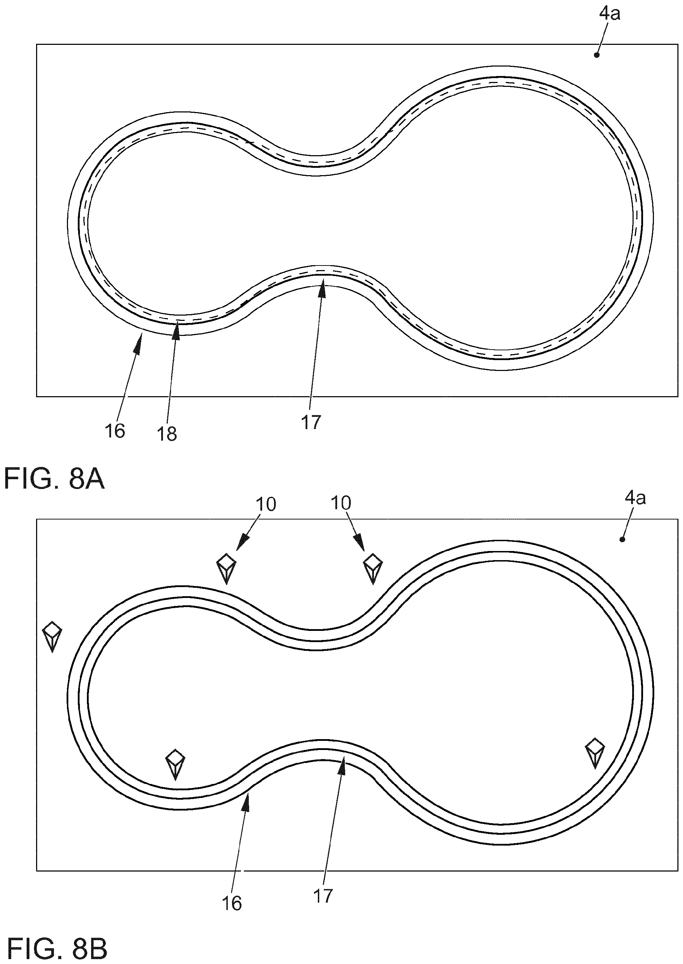

Mit Bezug zu den Figuren 8A und 8B werden Ausführungsbeispiele erfindungsgemäß erzeugter Anzeigen erläutert. Die Erzeugung der Anzeigen erfolgt analog zu den oben dargestellten Fällen.

Figur 8A zeigt eine Ansicht des Fahrstreckenverlaufs 16, wobei ferner Darstellungen der tatsächlich gefahrenen Strecke 17 und der Ideallinie 18 überlagert sind. Dies erlaubt dem Nutzer, in einem Vergleichsmodus zu erkennen, an welchen Stellen er wie weit von der Ideallinie 8 abgewichen ist. Diese Darstellung kann also insbesondere dann aufgerufen werden, wenn das Fahrzeug 5 gerade nicht fährt, sondern eine weitere Fahrt geplant ist und Verbesserungen gegenüber der letzten Fahrt vorgenommen werden sollen.

Ferner umfasst die in Figur 8B dargestellte Anzeige Informationen über die Bremspunkte 10 entlang der Darstellung der Fahrstrecke 16. Zudem wird in dem beispielhaft gezeigten Fall die Ideallinie 18 dargestellt. Analog dazu können in weiteren Ausführungsbeispielen auch Punkte für die Beschleunigung entlang der Darstellung der Fahrstrecke 16 angegeben werden. Zudem kann ein Vergleich mit den tatsächlich durchgeführten Bremsungen und/oder Beschleunigungen vorgenommen werden, indem diese jeweils entlang der Darstellung der Fahrstrecke 16 angezeigt werden und die Abweichungen zu dem optimalen Werten, betreffend etwa Position und Intensität der Brems- bzw. Beschleunigungsvorgänge, angegeben sind.

In einem weiteren Ausführungsbeispiel können Teile des in den Figuren 8A und 8B dargestellten Fahrstreckenverlaufs 16 vergrößert dargestellt werden. Dies erlaubt eine detailliertere Ansicht und Analyse der einzelnen Streckenabschnitte.

Das erfindungsgemäße System weist ferner in einem weiteren Ausführungsbeispiel einen Konfigurationsmodus auf, in dem der Nutzer Einstellungen vornehmen kann, indem er Daten eingibt und/oder Optionen zur Konfiguration auswählt. Insbesondere ist vorgesehen, dass der Nutzer ein Farbschema auswählen kann. Zum Beispiel können Probleme bei der Darstellung für farbenblinde Personen durch die Wahl anderer Farbpaare als Rot/Grün oder durch die Wahl bestimmter Schraffierungen oder Muster umgangen werden.

Es ist ferner insbesondere ein "Tutorial"-Menü vorgesehen, das der Nutzer auswählen kann, um Erklärungstexte zu einzelnen Funktionen des Systems aufzurufen. Zudem ist insbesondere eine Liste von für die Fahrstrecke 6 gespeicherten Leistungen, etwa Rundenzeiten, abrufbar, sodass der Nutzer seine eigene Leistung vergleichen und einordnen kann.

### Bezugszeichenliste

- 1: Erfassungseinheit
- 2: Ermittlungseinheit
- 3: Steuereinheit
- 4: Mobiles Nutzergerät
- 4a: Anzeigefläche
- 5: Fahrzeug
- 6: Fahrstrecke
- 7: Tatsächlich gefahrene Strecke
- 8: Ideallinie
- 10: Symbole für Bremspunkte
- 16: Darstellung der Fahrstrecke
- 17: Darstellung der tatsächlich gefahrenen Strecke
- 18: Darstellung der Ideallinie

## Patentansprüche

1. Verfahren zur Unterstützung eines Nutzers bei der Planung und Durchführung eines Befahrens einer Fahrstrecke (6) mit einem Fahrzeug (5), bei dem
- Daten über die Fahrstrecke (6) erfasst werden,
- theoretische Optimaldaten (8) zumindest eines Parameters zum optimalen Befahren der Fahrstrecke (6) bestimmt werden,
- tatsächliche Daten (7) des Parameters während des Befahrens der Fahrstrecke (6) erfasst werden und eine Abweichung der tatsächlichen Daten (7) von den Optimaldaten (8) ermittelt wird,
- in Abhängigkeit von der ermittelten Abweichung eine Fahranweisung erzeugt wird und
- anhand der Fahranweisung eine graphische Darstellung eines Fahranweisungssymbols erzeugt und auf einer Anzeigefläche (4a) eines mobilen Nutzergeräts (4) angezeigt wird
**dadurch gekennzeichnet, dass**
bei der Erzeugung des Fahranweisungssymbols in Abhängigkeit von der Fahranweisung ein Rotationswinkel um zumindest eine Achse bestimmt wird.

2. Verfahren nach Anspruch 1,
**dadurch gekennzeichnet, dass**
der zumindest eine Parameter einen Bewegungsparameter und/oder einen Steuerungsparameter des Fahrzeugs umfasst, insbesondere die Position, die Geschwindigkeit, die Beschleunigung, die Lenkbetätigung und/oder die Bremsbetätigung.

3. Verfahren nach einem der vorhergehenden Ansprüche,
**dadurch gekennzeichnet, dass**
das Fahranweisungssymbol eine dreidimensionale Darstellung eines geometrischen Objekts, insbesondere einer Pyramide, umfasst.

4. Verfahren nach einem der vorhergehenden Ansprüche,
**dadurch gekennzeichnet, dass**
das Fahranweisungssymbol eine farbliche Gestaltung aufweist, die in Abhängigkeit von der Fahranweisung erzeugt wird, wobei insbesondere Rot für eine Verzögerung und Grün für eine Beschleunigung steht.

5. Verfahren nach einem der vorhergehenden Ansprüche,
**dadurch gekennzeichnet, dass**
durch die Optimaldaten (8) eine Ideallinie auf der Fahrstrecke (6) definiert ist und, wenn anhand der tatsächlichen Daten (7) eine Abweichung von der Ideallinie in eine Richtung festgestellt wird, die Fahranweisung mit einer Richtungskomponente zur Korrektur der befahrenen Trajektorie durch Eingriff in die Lenkung des Fahrzeugs erzeugt wird, wobei
das Fahranweisungssymbol eine Längsachse aufweist und die Längsachse in Abhängigkeit von der Richtungskomponente der Fahranweisung angeordnet wird.

6. Verfahren nach einem der vorhergehenden Ansprüche,
**dadurch gekennzeichnet, dass**
die graphische Darstellung des Fahranweisungssymbols eine zeitlich veränderliche Komponente aufweist, insbesondere ein Blinken und/oder eine Bewegung des Fahranweisungssymbols.

7. Verfahren nach einem der vorhergehenden Ansprüche,
**dadurch gekennzeichnet, dass**,
in einem Vergleichsmodus in Abhängigkeit von der ermittelten Abweichung eine graphische Vergleichsdarstellung mit einer räumlichen Repräsentation der Fahrstrecke (6) erzeugt und auf der Anzeigefläche (4a) des mobilen Nutzergeräts (4) angezeigt wird.

8. Verfahren nach Anspruch 7,
**dadurch gekennzeichnet, dass**,
die graphische Vergleichsdarstellung eine Überlagerung eines optimalen Verlaufs des Parameters (8) und einen tatsächlich erfassten Verlauf (7) des Parameters entlang der Fahrstrecke (6) umfasst.

9. Verfahren nach Anspruch 7 oder 8,
**dadurch gekennzeichnet, dass**
die räumliche Repräsentation der Fahrstrecke (6) zumindest zwei Streckenabschnitte umfasst,
die Streckenabschnitte als auswählbare Segmente des Anzeigeelements erzeugt werden und,
wenn ein Segment ausgewählt wird, die dem ausgewählten Segment zugeordneten Optimaldaten (8) und die tatsächlichen Daten (7) zu dem Streckenabschnitt angezeigt werden.

10. Verfahren nach einem der vorhergehenden Ansprüche,
**dadurch gekennzeichnet, dass**
in einem Konfigurationsmodus Konfigurationseingaben von dem Nutzer erfasst werden.

11. Verfahren nach Anspruch 10,
**dadurch gekennzeichnet, dass**
das Fahranweisungssymbol eine farbliche Gestaltung aufweist, die in Abhängigkeit von den Konfigurationseingaben erzeugt wird.

12. System zur Unterstützung eines Nutzers bei der Planung und Durchführung eines Befahrens einer Fahrstrecke (6) mit einem Fahrzeug (5), mit
- einer Erfassungseinheit (1), mittels welcher Daten über die Fahrstrecke (6) erfassbar sind und tatsächliche Daten (8) eines Parameters während des Befahrens der Fahrstrecke (6) erfassbar sind,
- einer Ermittlungseinheit (2), mittels welcher theoretische Optimaldaten (8) zumindest eines Parameters zum optimalen Befahren der Fahrstrecke (6) bestimmbar sind,
- einer Steuereinheit (3), mittels welcher eine Abweichung der tatsächlichen Daten (7) von den Optimaldaten (8) ermittelbar ist, in Abhängigkeit von der ermittelten Abweichung eine Fahranweisung erzeugbar ist und anhand der Fahranweisung eine graphische Darstellung eines Fahranweisungssymbols erzeugbar ist, und
- einem mobilen Nutzergerät (4) mit einer Anzeigefläche (4a), auf der die graphische Darstellung anzeigbar ist
**dadurch gekennzeichnet, dass**
bei der Erzeugung des Fahranweisungssymbols in Abhängigkeit von der Fahranweisung ein Rotationswinkel um zumindest eine Achse bestimmbar ist.

13. System nach Anspruch 12,
**dadurch gekennzeichnet, dass**
der zumindest eine Parameter einen Bewegungsparameter und/oder einen Steuerungsparameter des Fahrzeugs umfasst, insbesondere die Position, die Geschwindigkeit, die Beschleunigung, die Lenkbetätigung und/oder die Bremsbetätigung.

14. System nach Anspruch 12 oder 13,
**dadurch gekennzeichnet, dass**
die Anzeigefläche (4a) im Fahrzeug (5) am unteren Rand des Blickfeldes des Fahrers, insbesondere auf dem Armaturenbrett hinter dem Lenkrad, angeordnet ist.

## Claims

1. Method for assisting a user in the planning and implementation of driving a route (6) with a vehicle (5), wherein
- data about the route (6) are acquired,
- theoretically optimal data (8) of at least one parameter for optimal driving of the route (6) are determined,
- actual data (7) of the parameter are acquired during the driving of the route (6), and a deviation of the actual data (7) from the optimal data (8) is determined,
- a driving instruction is generated as a function of the determined deviation, and
- a graphical representation of a driving instruction symbol is generated on the basis of the driving instruction and displayed on a display surface (4a) of a mobile user device (4),
**characterized in that**
an angle of rotation about at least one axis is determined as a function of the driving instruction when the driving instruction symbol is generated.

2. Method according to claim 1,
**characterized in that**
the at least one parameter comprises a movement parameter and/or a control parameter of the vehicle, in particular the position, the velocity, the acceleration, the steering operation, and/or the brake actuation.

3. Method according to one of the preceding claims,
**characterized in that**
the driving instruction symbol comprises a three-dimensional representation of a geometric object, in particular a pyramid.

4. Method according to one of the preceding claims,
**characterized in that**
the driving instruction symbol has a color design which is generated as a function of the driving instruction, wherein in particular red stands for a deceleration and green stands for an acceleration.

5. Method according to one of the preceding claims,
**characterized in that**
an ideal line on the route (6) is defined by the optimal data (8) and, if a deviation from the ideal line in one direction is established on the basis of the actual data (7), the driving instruction is generated with a directional component for correcting the driven trajectory via intervention in the steering of the vehicle, wherein
the driving instruction symbol has a longitudinal axis, and the longitudinal axis is arranged as a function of the directional component of the driving instruction.

6. Method according to one of the preceding claims,
**characterized in that**
the graphical representation of the driving instruction symbol has a time-variable component, in particular a flashing and/or a movement of the driving instruction symbol.

7. Method according to one of the preceding claims,
**characterized in that**
in a comparison mode, a graphical comparative representation with a spatial representation of the route (6) is generated as a function of the determined deviation and is displayed on the display surface (4a) of the mobile user device (4).

8. Method according to claim 7,
**characterized in that**
the graphical comparative representation comprises a superposition of an optimal curve of the parameter (8) and an actually detected curve (7) of the parameter along the route (6).

9. Method according to claim 7 or 8,
**characterized in that**
the spatial representation of the route (6) comprises at least two route sections,
the route sections are generated as selectable segments of the display element, and,
if a segment is selected, the optimal data (8) associated with the selected segment and the actual data (7) relating to the route section are displayed.

10. Method according to one of the preceding claims,
**characterized in that**
in a configuration mode, configuration inputs by the user are registered.

11. Method according to claim 10,
**characterized in that**
the driving instruction symbol has a color design generated as a function of the configuration inputs.

12. System for assisting a user in the planning and implementation of driving a route (6) with a vehicle (5), comprising:
- an acquisition unit (1) by means of which data about the route (6) may be acquired and actual data (8) of a parameter may be acquired during the driving of the route (6),
- a determination unit (2) by means of which theoretically optimal data (8) of at least one parameter may be determined for optimal driving of the route (6),
- a control unit (3) by means of which a deviation of the actual data (7) from the optimal data (8) may be determined, a driving instruction may be generated as a function of the determined deviation, and a graphical representation of a driving instruction symbol may be generated on the basis of the driving instruction, and
- a mobile user device (4) having a display area (4a) on which the graphical representation may be displayed,
**characterized in that**
an angle of rotation about at least one axis may be determined as a function of the driving instruction when the driving instruction symbol is generated.

13. System according to claim 12,
**characterized in that**
the at least one parameter comprises a movement parameter and/or a control parameter of the vehicle, in particular the position, the velocity, the acceleration, the steering operation, and/or the brake actuation.

14. Method according to claim 12 or 13,
**characterized in that**
the display surface (4a) is arranged in the vehicle (5) at the lower edge of the driver's field of view, in particular on the dashboard behind the steering wheel.

## Revendications

1. Procédé d'assistance à un utilisateur lors de la planification d'un parcours routier (6) et de l'exécution de celui-ci à l'aide d'un véhicule (5), dans lequel
- des données sur le parcours routier (6) sont enregistrées,
- des données optimales théoriques (8) d'au moins un paramètre pour l'exécution optimale du parcours routier (6) sont déterminées,
- des données effectives (7) du paramètre pendant l'exécution du parcours routier (6) sont enregistrées et un écart entre les données effectives (7) et les données optimales (8) est déterminé,
- en fonction de l'écart déterminé, une instruction de conduite est générée et
- à l'aide de l'instruction de conduite, une représentation graphique d'un symbole d'instruction de conduite est générée et affichée sur une surface d'affichage (4a) d'un équipement utilisateur mobile (4),
**caractérisé en ce que**
lors de la génération du symbole d'instruction de conduite, un angle de rotation autour d'au moins un axe est déterminé en fonction de l'instruction de conduite.

2. Procédé selon la revendication 1,
**caractérisé en ce que**
ledit au moins un paramètre comprend un paramètre de déplacement et/ou un paramètre de commande du véhicule, en particulier la position, la vitesse, l'accélération, l'actionnement de braquage et/ou l'actionnement de frein.

3. Procédé selon l'une quelconque des revendications précédentes,
**caractérisé en ce que**
le symbole d'instruction de conduite comprend une représentation tridimensionnelle d'un objet géométrique, en particulier d'une pyramide.

4. Procédé selon l'une quelconque des revendications précédentes,
**caractérisé en ce que**
le symbole d'instruction de conduite présente une conception colorée, qui est générée en fonction de l'instruction de conduite, le rouge représentant en particulier un ralentissement et le vert une accélération.

5. Procédé selon l'une quelconque des revendications précédentes,
**caractérisé en ce que**
une ligne idéale sur le parcours routier (6) est définie par les données optimales (8) et, lorsqu'un écart dans une direction par rapport à la ligne idéale est constaté à l'aide des données effectives (7), l'instruction de conduite est générée avec une composante de direction pour corriger la trajectoire suivie par intervention dans la direction du véhicule,
le symbole d'instruction de conduite présentant un axe longitudinal et l'axe longitudinal étant disposé en fonction de la composante de direction de l'instruction de conduite.

6. Procédé selon l'une quelconque des revendications précédentes,
**caractérisé en ce que**
la représentation graphique du symbole d'instruction de conduite présente une composante variable dans le temps, en particulier un clignotement et/ou un déplacement du symbole d'instruction de conduite.

7. Procédé selon l'une quelconque des revendications précédentes,
**caractérisé en ce que**
dans un mode de comparaison, en fonction de l'écart déterminé, une représentation comparative graphique avec une représentation spatiale du parcours routier (6) est générée et affichée sur la surface d'affichage (4a) de l'équipement utilisateur mobile (4).

8. Procédé selon la revendication 7,
**caractérisé en ce que**
la représentation comparative graphique comprend une superposition d'un profil optimal du paramètre (8) et d'un profil effectivement enregistré (7) du paramètre le long du parcours routier (6).

9. Procédé selon la revendication 7 ou 8,
**caractérisé en ce que**
la représentation spatiale du parcours routier (6) comprend au moins deux tronçons,
les tronçons sont générés en tant que segments sélectionnables de l'élément d'affichage et,
lorsqu'un segment est sélectionné, les données optimales (8) associées au segment sélectionné et les données effectives (7) relatives au tronçon sont affichées.

10. Procédé selon l'une quelconque des revendications précédentes,
**caractérisé en ce que**
dans un mode de configuration, des entrées de configuration de l'utilisateur sont enregistrées.

11. Procédé selon la revendication 10,
**caractérisé en ce que**
le symbole d'instruction de conduite présente une conception colorée qui est générée en fonction des entrées de configuration.

12. Système d'assistance à un utilisateur lors de la planification d'un parcours routier (6) et de l'exécution de celui-ci à l'aide d'un véhicule (5), présentant
- une unité d'enregistrement (1), à l'aide de laquelle des données sur le parcours routier (6) peuvent être enregistrées et des données effectives (8) d'un paramètre pendant l'exécution du parcours routier (6) peuvent être enregistrées,
- une unité de détermination (2), au moyen de laquelle des données optimales théoriques (8) d'au moins un paramètre pour l'exécution optimale du parcours routier (6) peuvent être déterminées,
- une unité de commande (2), au moyen de laquelle un écart entre les données effectives (7) et les données optimales (8) peut être déterminé, une instruction de conduite pouvant être générée en fonction de l'écart déterminé et une représentation graphique d'un symbole d'instruction de conduite pouvant être générée à l'aide de l'instruction de conduite et
- un équipement utilisateur mobile (4) présentant une surface d'affichage (4a), sur laquelle la représentation graphique peut être affichée,
**caractérisé en ce que**
lors de la génération du symbole d'instruction de conduite, un angle de rotation autour d'au moins un axe peut être déterminé en fonction de l'instruction de conduite.

13. Système selon la revendication 12,
**caractérisé en ce que**
ledit au moins un paramètre comprend un paramètre de déplacement et/ou un paramètre de commande du véhicule, en particulier la position, la vitesse, l'accélération, l'actionnement de braquage et/ou l'actionnement de frein.

14. Procédé selon la revendication 12 ou 13,
**caractérisé en ce que**
la surface d'affichage (4a) dans le véhicule (5) est disposée au niveau du bord inférieur du champ de vision du conducteur, en particulier sur le tableau de bord derrière le volant.
